(19) Europäisches Patentamt
European Patent Office
Office européen des brevets

(11) **EP 1 884 767 A2**

(12) **EUROPÄISCHE PATENTANMELDUNG**

(43) Veröffentlichungstag:
**06.02.2008   Patentblatt 2008/06**

(51) Int Cl.:
***G01N 22/00*** (2006.01)

(21) Anmeldenummer: **07014978.6**

(22) Anmeldetag: **31.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **01.08.2006   DE 102006036190**
**01.08.2006   DE 102006036179**
**01.08.2006   DE 102006036188**

(71) Anmelder:
• **Technische Universität Hamburg-Harburg**
**21073 Hamburg (DE)**
• **Technische Universität Braunschweig Carolo-Wilhelmina**
**38106 Braunschweig (DE)**

• **TuTech Innovation GmbH**
**21079 Hamburg (DE)**

(72) Erfinder:
• **Sokoll, Thorsten**
**83329 Waging am See (DE)**
• **Jacob, Arne, Prof.**
**38116 Braunschweig (DE)**
• **Pawlak, Holger**
**20535 Hamburg (DE)**

(74) Vertreter: **Gerstein, Hans Joachim et al**
**Gramm, Lins & Partner GbR**
**Freundallee 13a**
**30173 Hannover (DE)**

(54) **Resonanter Mikrowellensensor and Frequenzbestimmungs-Schaltungsanordnung**

(57)   Ein resonanter Mikrowellensensor (1) zur Bestimmung von Eigenschaften eines zu untersuchenden Materials mittels hochfrequenter Messung eines Reflexionsfaktors hat einen Mikrowellenzuleiter (4) zur Zuleitung des hochfrequenten Signals und einen Sensorkopf (9).

An dem Ende des Mikrowellenzuleiters (4) ist ein an den Sensorkopf (9) angrenzender elektrisch leitfähiger Resonator (6) angeordnet und der Sensorkopf (9) weist eine für mindestens eine zu bestimmende Eigenschaft des zu untersuchenden Materials sensitive Schicht (8) auf.

Fig. 1

EP 1 884 767 A2

## Beschreibung

Die Erfindung betrifft einen resonanten Mikrowellensensor zur Bestimmung von Eigenschaften eines zu untersuchenden Materials mittels hochfrequenter Messung eines Reflexionsfaktors mit einem Mikrowellenzuleiter zur Zuleitung des hochfrequenten Signals und einem Sensorkopf.

Die Erfindung betrifft weiterhin eine Oszillator-Schaltungsanordnung zur Erzeugung eines mit einer Oszillationsfrequenz oszillierenden elektromagnetischen Signals am Ausgang der Oszillator-Schaltungsanordnung sowie eine Frequenzbestimmungs-Schaltungsanordnung zur breitbandigen Bestimmung der charakteristischen Frequenz eines Messsignals insbesondere eines solchen resonanten Mikrowellensensors mit einem Phasendiskriminator zum Vergleich der Subharmonischen des Messsignals mit einer Vergleichsfrequenz eines Vergleichsoszillatorsignals von einem Vergleichsoszillator.

Die Messung von Stoffeigenschaften mit Mikrowellensensoren durch Auswertung von Resonanzfrequenzen und der Güte einer Resonanzkurve, die durch Beaufschlagen des Mikrowellensensors mit einem gewobbelten hochfrequenten Signal aufgenommen wird, ist hinreichend bekannt. Hierbei wird das Signal mit veränderlicher Frequenz in den Mikrowellensensor eingekoppelt und die Resonanzfrequenz und gegebenenfalls die Güte bestimmt.

Derartige resonante Mikrowellensensoren werden genutzt, um die Feuchtigkeit innerhalb von Bauwerken (Beton, Mauerwerk, etc.) messtechnisch zu erfassen, da deren Kenntnis aus vielen Gründen notwendig ist. Ein hoher Feuchtegehalt im Mauerwerk führt zur Veränderung physikalischer Kennwerte: der Wärmewert wird reduziert; es entstehen Formveränderungen, Korrosion, erhöhte Frostempfindlichkeit, Schäden durch aufsteigende Salze und Zerstörungen durch Pilze, deren Sporen zusätzlich die Gesundheit beeinträchtigen können. Feuchte kann aus diesen Gründen mitunter sogar zu einem statischen Versagen des Mauerwerks führen. Um dieses, insbesondere im Hinblick auf den alternden Bauwerksbestand zu verhindern, werden kompakte Sensoren benötigt, welche die Feuchte sehr empfindlich und ohne den störenden Einfluss von Querempfindlichkeiten zerstörungsfrei messen können.

Eine anerkannte Standardmethode zur Detektion von Feuchte in Bauwerken ist die Entnahme von Bohrkernen und deren anschließende chemische oder thermogravimetrische Analyse im Labor. Neben dem offensichtlichen Nachteil der zerstörenden Einwirkung auf das Bauwerk ist diese Methode sehr aufwendig, langwierig und daher teuer. Weiterhin muss der zu untersuchende Teil des Bauwerkes zugänglich und oberflächennah sein, was in der Praxis oftmals nicht gewährleistet ist. Aus der Vielzahl der Gründe schließt das Verfahren ein In-Situ-Monitoring vollständig aus.

Kapazitive Methoden messen die Änderung der dielektrischen Eigenschaften eines Materials bei variierendem Feuchtegehalt. Typische Arbeitsfrequenzen befinden sich im niedrigen MHz-Bereich. Das Verfahren ist zerstörungsfrei. Aufgrund der konzeptbedingten niedrigen Arbeitsfrequenz von wenigen MHz weisen kapazitive Sensoren eine starke Querempfindlichkeit gegenüber in Bauwerken inhärent existenten Salzen auf. Dieses erschwert die Bestimmung der Feuchte erheblich.

Neutronensonden nutzen die Bremswirkung von Wasser auf Neutronen hoher Energie aus, um den Feuchtegehalt eines Bauwerks zu überprüfen. Dieses Messverfahren ist zerstörungsfrei und erlaubt auch das Erfassen von Feuchte in tiefer liegenden Schichten eines Bauwerks. Die Nutzung der Neutronensonde erfordert eine gründliche und spezielle Ausbildung des Anwenders sowie die Beachtung besonderer Sicherheitsvorkehrungen beim Transport und Lagerung. Zudem sind die Geräte zu groß und teuer für die (in-Situ-)Anwendung in Messsystemen.

Mikrowellenverfahren basieren ebenso wie die kapazitiven Methoden auf der Änderungen der dielektrischen Eigenschaften eines Materials bei variierender Feuchte. Hierbei werden jedoch mögliche Querempfindlichkeiten gegenüber Salzen durch die Verwendung einer hohen Arbeitsfrequenz von z. B. 2,5 GHz minimiert. Die Mikrowellenverfahren eignen sich im besonderen Maße für die Detektion von Feuchte in Bauwerken. Allerdings sind bestehende Sensoren aufgrund ihrer Auslegung als Hohlraumresonator sehr groß oder sie besitzen eine starke Querempfindlichkeit gegenüber Temperaturschwankungen.

Ein solcher Mikrowellensensor ist beispielsweise in der DE 101 02 578 C2 beschrieben. Der Sensor dient der Bestimmung von Eigenschaften eines zu untersuchenden Materials mittels der hochfrequenten Messung des Reflexionsfaktors. Das Hochfrequenzsignal wird durch eine koaxiale Zuführung zum Resonator geleitet. Dieser besteht aus einem Rundhohlleiter, in dem durch ein Trägermaterial ein sich in drei-Raum-Dimensionen erstreckender Wendelleiter (Helix) gehalten wird. Der Wendelleiter wird durch das elektromagnetische Feld angeregt. Der Rundhohlleiter ist in drei Schichten unterteilt, welche die Ankopplung, die Resonanzfrequenz und die Empfindlichkeit des Sensors bestimmen. Der Resonator wird durch eine feuchtesensitive und mit der Umgebung in Kontakt stehende Schicht belastet und verändert daher in Abhängigkeit von dessen Feuchte seine charakteristischen Eigenschaften, wie die Ankopplung, die Güte und die Resonanzfrequenz. Die Resonanzfrequenz ist besonders zur Bestimmung der Feuchte geeignet. Ein Problem ist, dass sich bei Temperaturschwankungen die Länge des Helixdrahtes und damit der Abstand zwischen Wellenwendelleiter und sensitivem Material verändert, der maßgeblich für die Empfindlichkeit des Sensors ist. Die daraus resultierende Veränderung der Resonanzfrequenz erlaubt somit nur ein genaues Bestimmen der Feuchte nach einer sehr aufwendigen Kalibrierung über den zweidimensionalen Parameterraum Feuchte und Temperatur. Die Verwendung eines Materials im Resonator hat den Vorteil, dass die Helix zentriert gehalten und das Innere des Sensors gegen das Eindringen von Verschmutzungen geschützt wird. Das hierfür genutzte chemisch inerte Material Teflon ist zwar verlustarm, hat aber, wie eine Reihe anderer dielektrischer Materialien, den Nachteil eines irreversiblen Temperaturverhaltens. Der Grund hierfür liegt in der prinzipbedingten Nachbarschaft von Materialien mit variierenden thermischen Ausdehnungskoeffizienten (Metall - dielektrisches Material). Hierdurch kommt es bei Temperaturschwankungen zu mechanischen Spannungen und somit zu irreversiblen Verschiebungen in der Lage der Helix, deren Auswirkung nicht durch Kalibrierroutinen kompensiert werden können.

EP 0 908 718 A1 offenbart einen Mikrowellen-Streufeldsensor zur Feuchte- und/oder Dichtemessung mit einem rotationssymmetrischen geschlossenen Ringleiter.

US 5,334,941 A1 offenbart einen resonanten Mikrowellen-Reflexionssensor mit einem schlitzgekoppelten Dipol-Resonator. Der sich von einer Einkoppelstelle in zwei Seiten erstreckende Dipol-Resonator ist relativ groß.

Der übliche Weg, die charakteristischen Eigenschaften eines resonanten Sensors zu erfassen, besteht in der Messung und Auswertung des Reflexionsspektrums. Hierfür wird der Sensor mit einem Netzwerkanalysator verbunden, welcher den resonanten Sensor mit einem in der Frequenz variierenden elektromagnetischen Signal versorgt. Gemäß den Eigenschaften des Resonators wird dieses Signal in Abhängigkeit der Frequenz reflektiert oder transmittiert. Aus dem für den resonanten Sensor typischen Reflexionsspektrum lassen sich die charakteristischen Eigenschaften Resonanzfrequenz, Güte und Koppelfaktor des Resonators ableiten. Die Resonanzfrequenz ist beispielsweise bei Feuchtesensoren von besonderem Interesse, da sich die Resonanzfrequenz in Abhängigkeit von der Feuchte systematisch verändert.

Die Messung des Reflexionsspektrums mit einem Netzwerkanalysator, der in der Regel eine zentrale Auswerteeinheit, eine Signalquelle, mindestens einen Koppler sowie einen Detektor enthält, ist relativ aufwendig. Kommerziell erhältliche Netzwerkanalysatoren sind im Allgemeinen sehr breitbandig, hochempfindlich und damit teuer. Sie sind zudem schwer und unhandlich. Netzwerkanalysatoren sind zumeist für den Einsatz im Labor konzipiert und eignen sich nur bedingt für den Einsatz in industrieller Messumgebung. Aufgrund der hohen Kosten für geeignete Schalter und Kabel lassen sich nur sehr bedingt mehrere Sensoren über einen Netzwerkanalysator auslesen.

Kompakte Netzwerkanalysatoren haben eine geringere Bandbreite. Sie sind immer noch relativ teuer.

Wird anstelle eines passiven Sensors ein aktiver Sensor verwendet, an dessen Ausgang ein charakteristisches Signal erzeugt wird, so kann die aufwändige Netzwerkanalyse durch eine einfache Frequenzmessung ersetzt werden. Bei Methoden zur direkten Frequenzmessung wird das Messsignal mit der zu bestimmenden Frequenz gegebenenfalls über einen Teiler auf ein Tor geschaltet, das in Abhängigkeit einer bekannten Zeitbasis geöffnet und geschlossen wird. Ist das Tor geöffnet, werden bestimmte Ereignisse, wie z.B. die Nulldurchgänge gezählt. Aus der Anzahl dieser Ereignisse während der bekannten Zeitbasis wird dann die Frequenz berechnet. Da der Frequenzbereich der Zähler für die zu bestimmenden Ereignisse begrenzt ist, können höhere Frequenzen nur unter Verwendung eines Vorteilers bestimmt werden.

Durch den Vorteiler mit dem Vorteilerfaktor N vergrößert sich die Ungenauigkeit um den Faktor N oder die Messdauer verlängert sich bei gleich bleibender Genauigkeit um den Faktor N. Der Strombedarf des Zählers ist zudem relativ groß.

Einschränkungen der direkten Frequenzmessung, die durch den Vorteiler entstehen, können durch die Verwendung eines Transferoszillators verhindert werden. Zur an sich bekannten Frequenzbestimmung mit einem Transferoszillator wird ein spannungsgesteuerter Oszillator (Voltage Controlled Oscillator - VCO) genutzt, der über einen Oberwellengenerator harmonische Oberschwingungen erzeugt, die mit der zu bestimmenden Frequenz des Messsignals in einem phasenstarr gekoppelten Regelkreis (Phase-Locked-Loop PLL) verglichen werden. Wenn eine der Harmonischen mit der zu bestimmenden Frequenz des Messsignals übereinstimmt, so kann diese aus der Multiplikation der Ordnungsnummer der genutzten Oberwelle mit der gemessenen Frequenz des spannungsgesteuerten Oszillators bestimmt werden. Der Nachteil der Frequenzbestimmung mittels des Transferoszillators liegt in dem komplexen Aufbau. So werden neben dem Zähler ein phasenstarr gekoppelter Regelkreis, ein Oberwellengenerator und ein spannungsgesteuerter Oszillator benötigt. Für einen kleinen kostengünstigen Aufbau ist der Transferoszillator daher nicht geeignet.

Aufgabe der vorliegenden Erfindung ist es, einen verbesserten resonanten Mikrowellensensor zu schaffen, der besonders kompakt und robust ist und eine geringe Querempfindlichkeit gegenüber Temperaturschwankungen hat.

Die Aufgabe wird mit dem Mikrowellensensor der eingangs genannten Art dadurch gelöst, dass an dem Ende des Mikrowellenzuleiters ein an den Sensorkopf angrenzender elektrisch leitfähiger Resonator angeordnet ist und dass der Sensorkopf eine für mindestens eine zu bestimmende Eigenschaft des zu untersuchenden Materials sensitive Schicht aufweist.

Die Nutzung eines solchen zweidimensionalen Resonators, der sich planar auf einer Ebene erstreckt und als Monopol von einem Ende des Resonators gespeist ist, wobei das andere Ende des Resonators offen ist, hat den Vorteil, dass sich der Resonator nicht in Richtung der sensitiven Schicht ausdehnen kann. Damit wird der Einfluss der Temperatur auf das Reflexionsspektrum des Resonators minimiert. Auf der anderen Seite ergeben sich aus der Verwendung des Resonators keine Einschränkungen bezüglich der breitbandigen Abstimmbarkeit des Resonators. Die Resonanzfrequenz kann einfach durch Veränderung der Resonatorlänge eingestellt werden.

Durch die planare Anordnung des Resonators gelingt es insbesondere, die Temperaturquerempfindlichkeit wesentlich zu verringern.

Der planare Resonator bestimmt die Resonanzfrequenz und kann in flexibler Art aus einer beliebig großen Anzahl beliebig gefasster und miteinander verbundener Leiterstücke gebildet werden.

Durch die Nutzung eines zweidimensionalen Resonators, wie beispielsweise einer Spirale, im Vergleich zur Helix ergibt sich zudem vorteilhafterweise eine um ein Vielfaches vergrößerte Wechselwirkungsfläche zwischen dem die Resonanzfrequenz bestimmenden Element und dem sensitiven Material, so dass die Gesamtempfindlichkeit des Sensors gegenüber der Feuchte steigt und Störeinflüsse durch die Temperaturschwankungen weiter an Bedeutung verlieren. Zudem kann durch die Verwendung einer Spirale, insbesondere im Vergleich zum Dipol-Resonator eine erhebliche Reduzierung der Länge des Sensors erreicht werden.

Da es sich bei dem Resonator, wie z. B. einer Spirale um eine planare Struktur handelt, kann diese einfach und hochgenau durch photolithographische Prozesse hergestellt werden. Somit wird es ebenfalls möglich, den Resonator zusammen mit der Mikrostreifenzuleitung auf einem Substrat integriert herzustellen.

Die Spirale wird vorzugsweise aus einer auf einer Ebene planar spiralförmig um ein Zentrum in Kreisbahn gewickelten Leiterbahn gebildet. Kreisbahn wird in diesem Zusammenhang so verstanden, dass der Radius der Kreisbahn ausgehend vom Zentrum kontinuierlich beim Durchlaufen der Spirale in Abhängigkeit vom Bogenwinkel zunimmt.

Optional kann der Resonator aber auch aus einer Vielzahl gerader Leiterstücke gebildet sein, die mit ihren Enden aufeinanderfolgend so angeordnet sind, dass für jede Leiterbahn die aufeinanderfolgenden Enden der jeweils beiden aufeinanderfolgenden Leiterbahnen senkrecht zueinander stehen.

In einer vorteilhaften Ausführungsform ist der Mikrowellenzuleiter in einem zylindrischen Rohr angeordnet, dessen Ende den zylinderförmigen Sensorkopf bildet. Der Resonator ist dann in der Ebene quer zur Längsrichtung des Rohres planar angeordnet, so dass sich der planare Resonator radial im Rohrquerschnitt erstreckt.

In einer bevorzugten Ausführungsform sind der Mikrowellenzuleiter und der Resonator auf einer Ebene auf einer ersten Oberfläche eines plattenförmigen Substrats angeordnet, wobei sich der Sensorkopf von dem Substrat senkrecht zur Ebene erstreckt. Diese Ausführungsform kann besonders kompakt und durch photolithographische Prozesse sehr einfach und hochgenau hergestellt werden.

Bei diesem resonanten Mikrowellensensor kann auf einer zweiten Oberfläche des Substrats, die der ersten Oberfläche des Substrats gegenüberliegt, auf der der Mikrowellenzuleiter und der Resonator angeordnet sind, eine mit elektrischer Masse verbindbare Masse-Ebene sein.

Der Sensorkopf kann auf der zweiten Oberfläche des Substrats, die die Masse-Ebene trägt, angeordnet sein. Dann dient das Substrat als Abstandshalter und Dichtung zwischen dem sensitiven Material und dem Resonator. Das Substrat bildet somit eine Zwischenschicht zwischen sensitiven Material und Resonator.

Es ist aber auch denkbar, dass der Sensorkopf auf der ersten Oberfläche des Substrats, die die Mikrowellenzuleiter und den Resonator trägt, angeordnet ist. Dann ist eine Zwischenschicht zwischen dem Resonator und der sensitiven Schicht im Sensorkopf angeordnet, die als Abstandshalter und Dichtung wirkt. Diese Zwischenschicht kann eine Folie sein.

Der Resonator und der Mikrowellenzuleiter können galvanisch miteinander gekoppelt sein. Es ist aber auch denkbar, dass Resonator und der Mikrowellenzuleiter mit einer Schlitzkopplung miteinander gekoppelt sind.

Der resonante Mikrowellensensor kann beispielsweise zur Feuchtigkeitsmessung eingerichtet sein, indem die sensitive Schicht zur Ermittlung von Feuchtigkeit in dem an die sensitive Schicht angrenzenden zu untersuchenden Material geeignet ist. Der Einsatz des Mikrowellensensors ist nicht auf die Anwendung als Feuchtesensor beschränkt. Er kann gleichermaßen zur Messung von Stoffeigenschaften verwendet werden, die zur Änderung der dielektrischen Eigenschaften des sensitiven Materials in dem Sensorkopf führen.

Die Auswertung eines resonanten Sensors gelingt auf einfache und zuverlässige Weise mit einer Oszillator-Schaltungsanordnung, bei der ein Verstärker mit einem resonanten Sensor so verkoppelt ist, dass die Resonanzfrequenz des Sensors die Oszillationsfrequenz bestimmt.

Üblich ist es, Oszillatoren mittels einer Steuerspannung durchzustimmen (Voltage Controlled Oscillator VCO). Dieses Prinzip wird hier erweitert: Eine unbekannte Messgröße, die keine Spannung, sondern z.B. eine bestimmte Feuchte sein kann, dient der Stabilisierung des Oszillatorsignals, welches dann einfach am Ausgang zur Verfügung gestellt und sehr einfach ausgewertet werden kann. Es liegt somit ein neuartiger z.B. feuchtegesteuerter Oszillator (Humidity Controlled Oscillator HCO) vor.

Der Sensor bestimmt somit die Ausgangsfrequenz eines Oszillators. Variiert der Sensor aufgrund einer Änderung in der zu detektierenden Messgröße seine Resonanzfrequenz, so folgt das Oszillatorsignal mit der Frequenz. Dieses ist dann sehr einfach und zudem kostengünstig auswertbar.

In einer Ausführungsform ist der Eingang des Verstärkers über den resonanten Sensor mit dem Ausgang des Verstärkers gekoppelt, so dass die Schaltungsanordnung schwingungsfähig wird. Das Oszillatorsignal liegt dann am Ausgang des Verstärkers an. Der Verstärker kann beispielsweise ein Hochfrequenztransistor sein.

In einer anderen Ausführungsform ist der resonante Sensor mit einem intern rückgekoppelten und daher an sich instabilen Verstärker verbunden, an dessen Ausgang das Oszillatorsignal anliegt. Auf diese Weise können Oszillatoren mit Reaktions-, Reflexions- und Transmissionsresonatoren gebildet werden.

Der Verstärker sollte bevorzugt direkt am Sensor angeordnet sein, so dass Laufzeiten und somit auch Phasendifferenzen minimiert werden, die entscheidende Kriterien für ein sicheres Anschwingen des Oszillators auf der Resonanzfrequenz darstellen.

Die Stromaufnahme der Oszillator-Schaltungsanordnung ist deutlich geringer, als bei den herkömmlichen Arten der Auswertung. Damit ist es möglich, den Sensor extern über ein niederfrequentes elektromagnetisches Feld mit der erforderlichen Leistung zu versorgen. Eine Spannungsversorgung über Batterien, Kabel oder ähnliches ist dann nicht mehr notwendig.

Die Oszillator-Schaltungsanordnung hat zudem den Vorteil, dass die Anforderungen an die Herstellungstoleranzen deutlich geringer als bei kompakten Netzwerkanalysatoren sind und der Platzbedarf der Schaltung sehr gering ist. Aufwendige Kalibrierungen des Messsystems sind zudem nicht notwendig.

Bei einem aktiven Sensor, an dessen Ausgang ein charakteristisches Signal erzeugt wird, ist es erwünscht, eine verbesserte Frequenzbestimmung-Schaltungsanordnung zur Bestimmung der charakteristischen Frequenz eines Messsignals insbesondere des vorbeschriebenen Mikrowellensensors zu schaffen, die mit wenigen Bauelementen platzsparend, einfach und preiswert aufgebaut werden kann.

Die Aufgabe wird mit der Frequenzbestimmung-Schaltungsanordnung der eingangs genannten Art dadurch gelöst, dass

- vor dem Eingang des Phasendiskriminators für das Messsignal ein mit einem Messsignal-Vorteilerfaktor variabel einstellbarer Messsignal-Vorteiler angeordnet ist und
- eine mit dem Messsignal-Vorteiler und dem Vergleichsoszillator zusammenwirkende Steuerungseinheit eingerichtet ist, um den Messsignal-Vorteiler und die Vergleichsfrequenz schrittweise so zu variieren, dass ausgehend von einer Einstellung, bei der die charakteristische Frequenz größer als die mit dem Messsignal-Vorteilerfaktor multiplizierte, am Phasendiskriminator anliegende Vergleichsfrequenz ist, die charakteristische Frequenz kleiner als die mit dem Messsignal-Vorteilerfaktor multiplizierte, am Phasendiskriminator anliegende Vergleichsfrequenz wird, wobei die charakteristische Frequenz aus dem Messsignal-Vorteilerfaktor und der am Phasendiskriminator anliegenden Vergleichsfrequenz im Übergang zwischen kleinerer und größerer mit dem Messsignal-Vorteilerfaktor multiplizierter Vergleichsfrequenz als die charakteristische Frequenz bestimmt wird.

Damit werden für die Frequenzbestimmung nur ein Verteiler, ein Phasenfrequenzdiskriminator, eine Ladungspumpe und eine Steuerungseinheit benötigt. Die drei erstgenannten Komponenten sind für Frequenzen bis in den Gigahertzbereich hinein bereits in Form von integrierten Schaltungen, wie sie zum Aufbau von phasenstarr gekoppelten Regelkreisen (PLL) verwendet werden, kostengünstig verfügbar.

Die Steuerungseinheit kann ein preiswerter Mikrocontroller sein.

Die integrierte Schaltung, welche den Verteiler, den Phasenfrequenzdiskriminator und die Ladungspumpe enthält, wird nicht wie bislang genutzt, um einen spannungsgesteuerten Oszillator phasenstarr an ein Referenzsignal durch das Einstellen bestimmter Teilerverhältnisse anzukoppeln. Vielmehr wird der mindestens eine Vorteiler solange variiert, bis das unbekannte, mit dem Messsignal-Vorteilerfaktor geteilte Messsignal dem am Phasendiskriminator anliegenden Referenzsignal (Vergleichoszillatorsignal) entspricht. Dadurch ist eine breitbandige Bestimmung der charakteristischen Frequenz möglich. Wird für den Mikrocontroller und die Ladungspumpe die gleiche Versorgungsspannung verwendet, so ist das Messergebnis zudem in weiten Bereichen unabhängig von Schwankungen der Versorgungsspannung. Die Genauigkeit der Frequenzbestimmung ist variabel mit Hilfe der Steuerungseinheit einstellbar. Aus der bekannten Vergleichsfrequenz und dem Messsignal-Vorteilerfaktor kann die charakteristische Frequenz durch einfache Multiplikation berechnet werden.

Vorzugsweise ist vor dem Eingang des Phasendiskriminators für das Vergleichsoszillatorsignal ein weiterer mit einem Vergleichsfrequenz-Vorteilerfaktor variabel durch die Steuereinheit einstellbarer Vergleichsfrequenz-Vorteiler angeordnet. Die Steuerungseinheit ist dann zur Ermittlung der charakteristischen Frequenz aus dem im Übergang zwischen größerer und kleinerer charakteristischen Frequenz, als die mit dem Messsignal-Vorteilerfaktor multiplizierte und dem Vergleichsfrequenz-Vorteilerfaktor dividierte bekannte fest eingestellte Vergleichsfrequenz des Vergleichsoszillatorsignals des Vergleichsoszillators eingerichtet.

Die Steuerungseinheit variiert dann nicht nur den Messsignal-Vorteilerfaktor, sondern auch den Vergleichsfrequenz-Vorteilerfaktor systematisch. Der Vergleichsoszillator muss damit nicht direkt angesteuert werden, sondern kann preiswert und einfach so aufgebaut werden, dass dieser eine fest eingestellte Vergleichsfrequenz erzeugt.

Am Ausgang des Phasendiskriminators ist eine Ladungspumpe angeordnet, die einen Ladungsspeicher speist. Damit werden lange Umladezeiten verhindert. Der Ladungsspeicher kann beispielsweise ein einfaches Widerstands-Kondensator-Glied sein. Die beiden Phasen des Messsignals und des Vergleichsoszillatorsignals werden durch die Messignal-Vorteiler und Vergleichsfrequenz-Vorteiler in der Frequenz heruntergeteilt und mittels des Phasendiskriminators voneinander subtrahiert. Je nach Vorzeichen der Differenz lädt und entlädt die angeschlossene Ladungspumpe den Ladungsspeicher. Für den Fall, dass die charakteristische Frequenz größer als die mit dem Messsignal-Vorteilerfaktor N multiplizierte und dem Vergleichsfrequenz-Vorteilerfaktor R dividierte Vergleichsfrequenz ist, liefert die Ladungspumpe keinen Strom an den daran angeschlossenen Ladungsspeicher, so dass keine Spannung an dem Ladungsspeicher und beispielsweise einem Schwellwertentscheider der Steuerungseinheit anliegt. Erst wenn die charakteristische Frequenz kleiner als die mit dem Messsignal-Vorteilerfaktor N multiplizierte und dem Vergleichsfrequenz-Vorteilerfaktor R dividierte Vergleichsfrequenz ist, lädt die Ladungspumpe den Ladungsspeicher. Die resultierende Spannungsänderung kann von der Steuerungseinheit dann detektiert werden, wobei die Werte des Vergleichsfrequenz-Vorteilerfaktors und des Messfrequenz-Vorteilerfaktors zum Zeitpunkt der Spannungsänderung den Übergang charakterisieren, bei dem die Messfrequenz gleich der mit dem Messfrequenz-Vorteilerfaktor multiplizierten und durch den Vergleichsfrequenz-Vorteilerfaktor dividierten Vergleichsfrequenz ist.

Die Frequenzbestimmung-Schaltungsanordnung wird vorzugsweise zur Auswertung von Sendesignalen einer Messeinheit genutzt, deren Frequenz sich in Abhängigkeit von der zu untersuchenden Eigenschaft ändert. Der Eingang des Messsignal-Vorteilers ist dann zur Verbindung mit der Messeinheit vorgesehen, um die charakteristischen Frequenz des Messsignals als Messgröße der Messeinheit zu bestimmen.

Die Erfindung wird nachfolgend anhand von Ausführungsbeispielen mit den beigefügten Zeichnungen näher erläutert. Es zeigen:

Fig. 1 -  perspektivische Schnittansicht einer ersten rohrförmigen Ausführungsform des resonanten Mikrowellensensors;

Fig. 2 -  perspektivische Teilschnittansicht einer zweiten planaren Ausführungsform des Mikrowellensensors;

Fig. 3 -  perspektivische Teilschnittansicht einer dritten planaren Ausführungsform des resonanten Mikrowellensensors;

Fig. 4 -  perspektivische Teilschnittansicht einer vierten planaren Ausführungsform des resonanten Mikrowellensensors mit Ankopplung der Spirale an das sensitive Material durch das die Spirale tragende Substrat;

Fig. 5 -  Blockdiagramm einer ersten Ausführungsform der Schaltungsanordnung mit Verstärker und Rückkoppelung über den Resonator;

Fig. 6 a) - c) -  Blockdiagramme von Varianten einer zweiten Ausführungsform der Schaltungsanordnung mit instabilem Verstärker und Reflexions-, Reaktionsoder Transmissionsresonator;

Fig. 7 -  typisches Reflexionsspektrums eines resonanten Sensors;

Fig. 8 -  in einem Versuch ermitteltes Spektrum eines aktiven resonanten Sensors;

Fig. 9 -  Diagramm der Oszillationsfrequenz über der Zeit während der Austrocknung eines resonanten Feuchtesensors;

Fig. 10 -  Blockdiagramm einer Schaltungsanordnung zur Bestimmung der charakteristischen Frequenz.

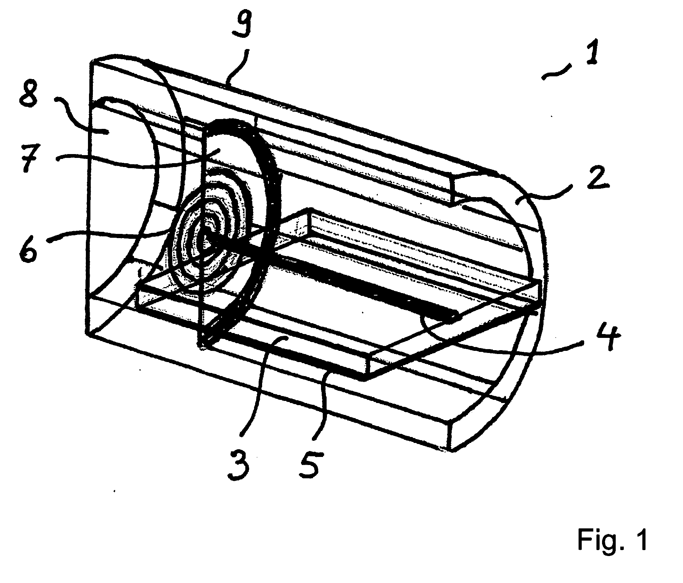

Die Figur 1 lässt eine erste zylinderförmige Ausführungsform des resonanten Mikrowellensensors 1 erkennen, der in einem zylinderförmigen Rohr als Gehäuse 2 realisiert ist. Auf einem Substrat 3 ist eine Mikrostreifenzuleitung 4 angeordnet. Gegenüberliegend von der ersten Oberseite des Substrats 3, die die Mikrostreifenzuleitung 4 trägt, ist eine mit elektrischer Masse verbundene Masse-Ebene 5 auf der zweiten Oberfläche des Substrats 3 vorgesehen, um die Mikrostreifenleitung zu bilden. Das Substrat 3 ist an den Seitenkanten mit der Innenwand des rohrförmigen Gehäuses 2 verbunden.

An dem Ende der Mikrostreifenzuleitung 4 ist ein Resonator 6 in Form einer Spirale galvanisch mit der Mikrostreifenzuleitung 4 verbunden. Die Spirale 6, die die Resonanzfrequenz des resonanten Mikrowellensensors 1 bestimmt, ist quer zur Längsrichtung des rohrförmigen Gehäuses 2 planar und erstreckt sich lediglich zweidimensional in radialer Richtung des Gehäuses 2. Die spiralförmige Leiterbahn hat hierbei einen ausgehend vom Zentrum der Spirale 6, an dem die Spirale 6 mit der Mikrostreifenzuleitung 4 verbunden ist, kontinuierlich zunehmenden Radius.

Die dem Substrat 3 gegenüberliegende planare Fläche der Spirale 6 wird mit einer Zwischenschicht 7 in Form einer Abstands- und Dichtungsfolie abgedeckt, die den gesamten Querschnitt im Inneren des Gehäuses 2 ausfüllt. Die Zwischenschicht 7 grenzt an ein sensitives Material 8 an, das für die zu bestimmende Eigenschaft eines zu untersuchenden Materials sensitiv ist. Das in einem Sensorkopf 9 untergebrachte sensitive Material 8 ist vorzugsweise zur Messung von Feuchtigkeit bestimmt, wobei sich die dielektrischen Eigenschaften des sensitiven Materials 8 in Abhängigkeit von der Feuchtigkeit ändern. Die Auswahl des sensitiven Materials ist an sich bekannt und sollte so erfolgen, dass die Querempfindlichkeiten insbesondere hinsichtlich von Temperaturabhängigkeiten möglichst gering sind.

Aus der Messung und Auswertung des Reflexionsfaktors r werden die Eigenschaften des sensitiven Materials bestimmt.

Durch die Verwendung der zweidimensional in radialer Richtung ausgedehnten Spirale 6 erfolgt keine thermische Ausdehnung in Richtung des sensitiven Materials 8, so dass der Einfluss der Temperatur auf das Reflexionsspektrum des Resonators minimiert wird. Durch die Auswahl der Spirallänge kann die Resonanzfrequenz eingestellt werden.

Die Spirale 6 wird direkt mit der Mikrostreifenzuleitung 4 verlötet. Das Substrat 3, auf dem die Mikrostreifenzuleitung 4 angeordnet ist, wird großflächig mit dem Gehäuse 2 verbunden, so dass auch hier keine irreversible Änderungen der Geometrie mit Temperaturschwankungen auftreten können. Die Abdichtung des Sensors 1 wird durch den Einsatz einer hermetisch dichten Zwischenschicht 7 erreicht. Mit der Zwischenschicht 7 kann auch der Abstand zwischen dem sensitiven Material 8 und der Spirale 6 und damit die Empfindlichkeit des Sensors genau eingestellt werden.

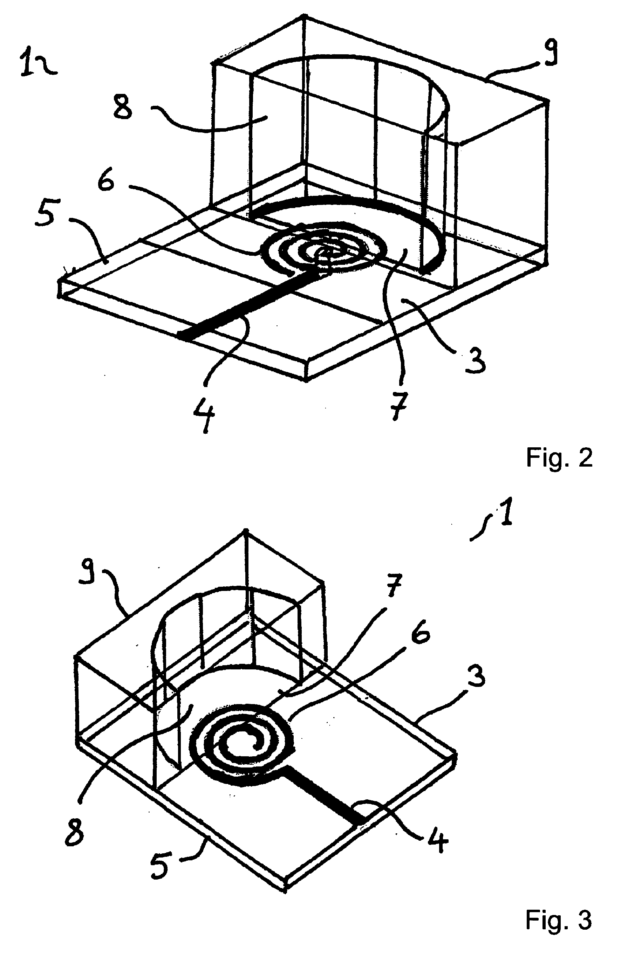

Die Figur 2 lässt eine perspektivische Teilschnittansicht einer zweiten Ausführungsform des resonanten Mikrowellensensors 1 erkennen. Die Mikrostreifenleitung erstreckt sich auf der zweiten Oberseite des Substrats 3 vorzugsweise entlang der Mittelachse des Substrats 3. Die Spirale 6 ist auf der gegenüberliegenden ersten Oberseite des Substrats 3 angeordnet, wobei die Mikrostreifenleitung über ein Via durch das Substrat 3 mit dem Zentrum der Spirale 6 elektrisch verbunden ist. Bei der dargestellten Anordnung befindet sich die Mikrostreifenzuleitung 4 somit auf der Unterseite des Substrates 3 und koppelt die auf der Oberseite des Substrates 3 befindliche Spirale 6 mittels einer Durchkontaktierung galvanisch an. Die Spirale 6 ist durch eine Zwischenschicht 7 als Abstandshalter und Dichtung in Form einer Folie beliebiger Dicke von dem sensitiven Material 8 getrennt. Die Masse-Ebene 5 ist auf der ersten Oberfläche des Substrats 3, d. h. der Oberseite, angeordnet, auf der sich auch die Spirale 6 befindet. Die Masse-Ebene 5 und die durch das Substrat 3 beabstandet von der Masse-Ebene 5 angeordnete Mikrostreifenzuleitung 4 bilden eine Mikrostreifenleitung.

Diese Ausführungsformen und die nachfolgend beschriebenen Ausführungsformen haben den Vorteil, dass sie sehr einfach und hochgenau durch photolithographische Prozesse hergestellt werden können. Der Resonator 6 kann zusammen mit der Mikrostreifenzuleitung 4 und der Masse-Ebene 5 integriert auf dem Substrat 3 hergestellt werden. Anschließend muss lediglich der Sensorkopf 9 mit dem sensitiven Material 8 auf dem Substrat 3 platziert werden.

Die Figur 3 lässt eine dritte Ausführungsform des resonanten Mikrowellensensors 1 erkennen. Wiederum sind die Mikrostreifenzuleitung 4, die Spirale 6 und die Masse-Ebene 5 auf einem Substrat 3 integriert. Die Mikrostreifenzuleitung 4 erstreckt sich dabei auf der ersten Oberfläche des Substrates 3, d. h. auf der Oberseite, und ist galvanisch mit dem äußeren Ende der Spirale 6, dem Ende mit dem größten Radius verbunden. Bei dieser Ausführungsform ist auch eine Ankopplung über das elektromagnetische Feld möglich, wie z. B. eine Schlitzkopplung. Der hierfür benötigte Aufbau als Mehrlagen-Substrat entspricht dem Stand der Technik.

Wiederum ist der Sensorkopf 9 mit dem sensitiven Material 8 und der Zwischenschicht 7 in Form einer Abstandshalter- und Dichtungsfolie auf dem Substrat 3 so platziert, dass das Zentrum des Sensorkopfes mit dem Zentrum der Spirale 6 übereinstimmt.

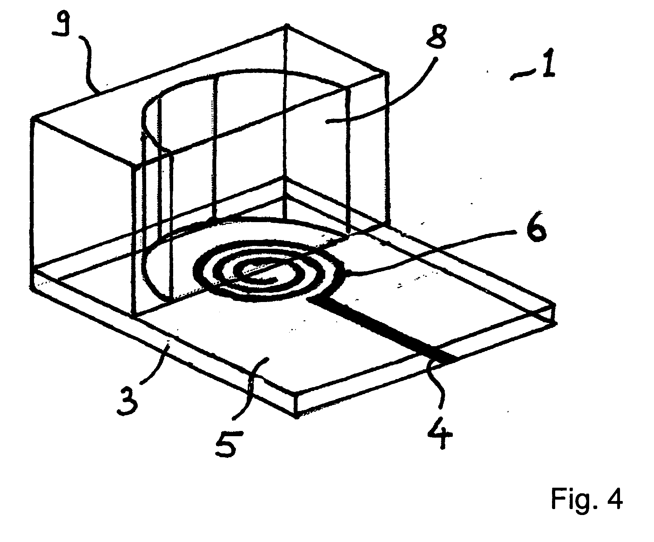

Die Figur 4 lässt eine vierte Ausführungsform des resonanten Mikrowellensensors 1 erkennen, bei dem die Mikrostreifenzuleitung 4 und die Spirale 6 auf der zweiten Oberfläche des Substrats 3, d. h. auf der Unterseite, angeordnet sind. Wiederum ist die Mikrostreifenzuleitung 4 mit dem äußeren Ende der Spirale 6, d. h. mit dem Ende mit dem größten Radius, galvanisch verbunden oder elektromagnetisch angekoppelt. Auf der gegenüberliegenden ersten Oberfläche (Oberseite) des Substrats 3 befindet sich der Sensorkopf 9 mit dem sensitiven Material 8 sowie die Masse-Ebene 5. Bei dieser Ausführungsform kann das Substrat 3 die Zwischenschicht 7 ersetzen und als Abstandshalter und Dichtung genutzt werden.

Bei den in den Figuren 2 und 3 dargestellten Ausführungsformen kann die leitfähige Spirale auch optional mit Hilfe von etablierten Depositionstechniken auf das sensitive Material 8 oder insbesondere auf die Zwischenschicht 7 in Form einer Folie aufgebracht werden. Dies hat den Vorteil, dass relative Verschiebungen zwischen der Spirale 6 und dem sensitiven Material 8 ausgeschlossen werden und die mechanische Stabilität verbessert wird.

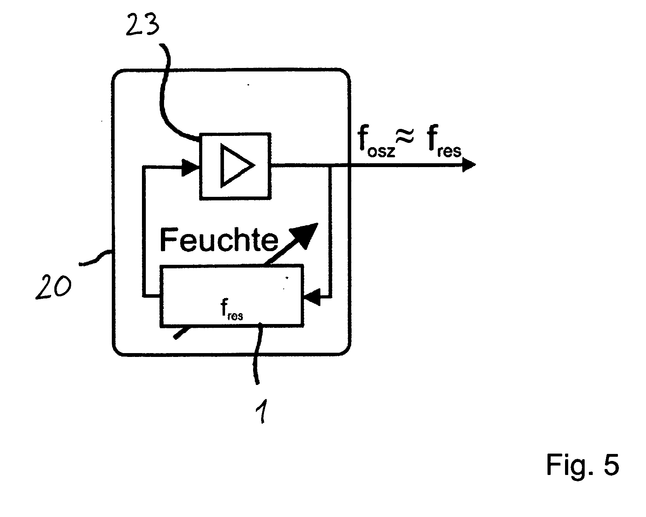

Figur 5 lässt ein Blockdiagramm einer Oszillator-Schaltungsanordnung 20 zur Bestimmung der Resonanzfrequenz eines resonanten Sensors 1 erkennen. Ein Rückkoppel-Oszillator gemäß der Oszillator-Schaltungsanordnung 20 wird in dem dargestellten Ausführungsbeispiel durch Verkopplung des Ausgangs eines Verstärkers 23 über einen resonanten Sensor 1 mit dem Eingang des Verstärkers 23 erreicht, wodurch die Oszillator-Schaltungsanordnung 20 schwingungsfähig wird. Am Ausgang des Verstärkers 23 liegt ein Oszillationssignal mit der Frequenz $f_{osz}$ an. Der resonante Sensor 1 bestimmt die Ausgangsfrequenz des Oszillators, so dass die Oszillationsfrequenz $f_{osz}$ der Resonanzfrequenz $f_{res}$ entspricht. Variiert der resonante Sensor 1 aufgrund einer Änderung in der zu detektierenden Messgröße seine Resonanzfrequenz $f_{res}$ so folgt das Oszillationssignal am Ausgang des Verstärkers 23 mit der Frequenz $f_{osz}$. Das Oszillationssignal am Ausgang des Verstärkers 23 ist einfach und kostengünstig auswertbar. Als instabiler Verstärker 23 kann beispielsweise ein Hochfrequenz-Transistor genutzt werden, der mit einer Gleichspannung versorgt wird.

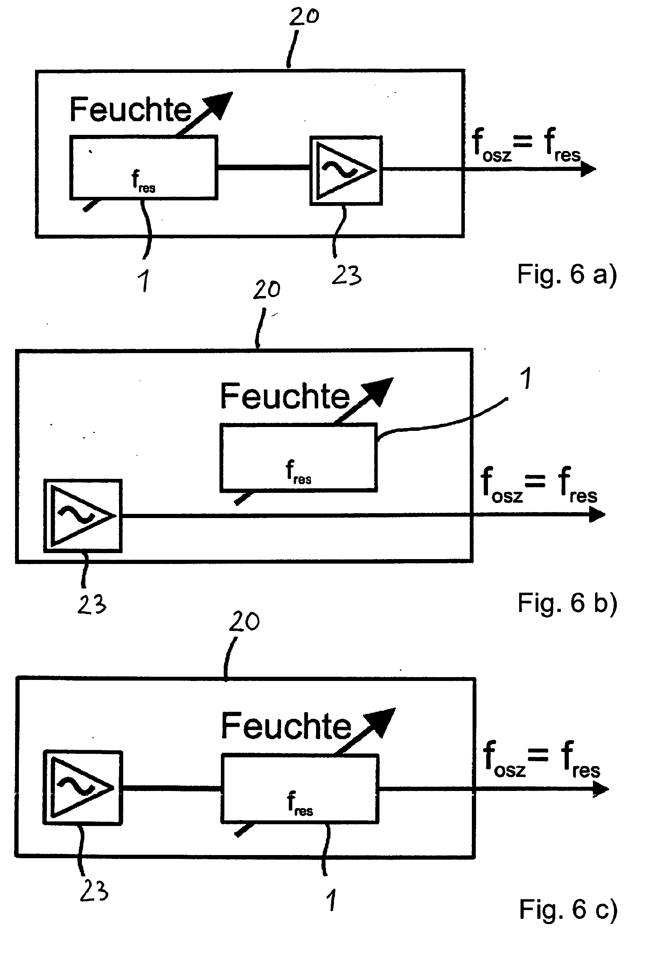

Figuren 6 a) bis c) lassen Blockdiagramme einer prinzipiellen Ausführungsform der Oszillator-Schaltungsanordnung 20 in verschiedenen Varianten erkennen. Bei dem in Figur 6 a) skizzierten Reflexionsoszillator wird der instabile Verstärker 23 am Eingang mit dem resonanten Sensor 1 (Reflexionsresonator) verbunden, was zur Stabilisierung des instabilen Verstärkers 23 führt. Wiederum bestimmt der resonante Sensor 1 die Ausgangsfrequenz des Oszillators, so dass die Oszillationsfrequenz $f_{osz}$ der Resonanzfrequenz $f_{res}$ entspricht. Figur 6 b) zeigt einen Reaktionsoszillator und Figur 6 c) einen Transmissionsoszillator. Die Instabilität des Verstärkers 23 ist durch die Sinuskurve angedeutet. Am Ausgang des Verstärkers 23 liegt bei allen Varianten ein Oszillationssignal mit der Frequenz $f_{osz}$ an.

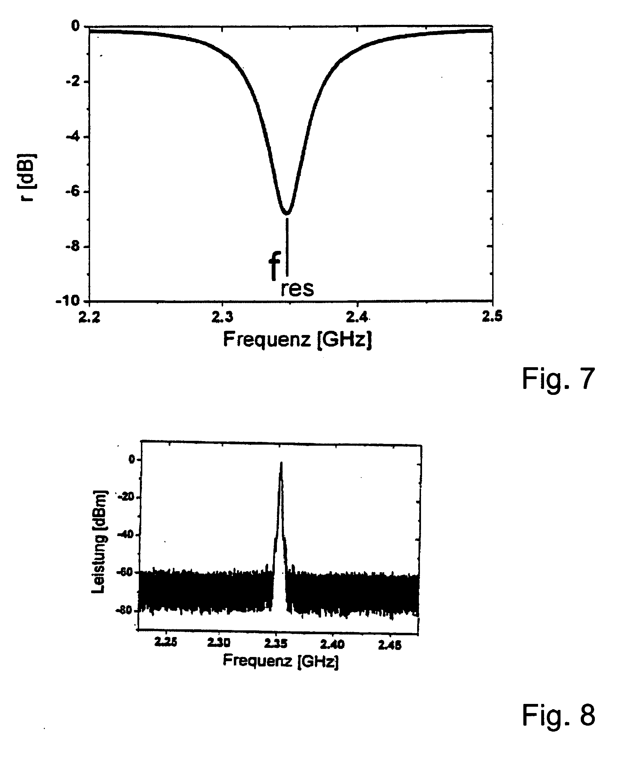

Figur 7 lässt ein typisches Reflexionsspektrum eines resonanten Sensors 1 erkennen, aus dem sich die Resonanzfrequenz $f_{res}$, die Güte und der Koppelfaktor als charakteristische Eigenschaften des Resonators ableiten lassen. Die Resonanzfrequenz $f_{res}$ ist bei dem resonanten Sensor 1 eine Funktion der zu bestimmenden Eigenschaft, beispielsweise der Feuchte eines zu untersuchenden Materials. Im Falle der sich verändernden Eigenschaft "Feuchte" ändert sich das dielektrische Verhalten des sensitiven Materials des resonanten Sensors 1 und damit das Reflexionsspektrum, so dass sich die Resonanzfrequenz $f_{res}$ verschiebt.

Dieses Verhalten wird vorliegend bei den in den Figuren 5 und 6 gezeigten Schaltungsanordnungen ausgenutzt.

Figuren 7 und 8 zeigen ein beispielhaftes Spektrum eines mit der Oszillator-Schaltungsanordnung 20 ausgewerteten Resonanzspektrums eines resonanten Feuchte-Sensors 1, der gewässert und anschließend an der Luft getrocknet wurde. Deutlich erkennbar ist die Oszillationsfrequenz im Bereich von 2,35 GHz, die aufgrund des Pegels von 0 dBm gut auswertbar ist.

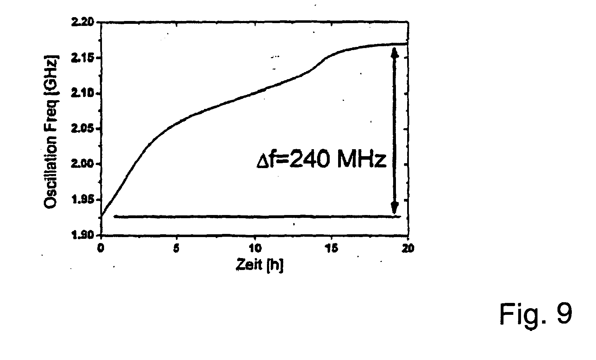

Der mit einem Spektrumsanalysator aufgezeichnete zeitliche Verlauf des Oszillationssignals ist in der Figur 9 dargestellt. Vom Zeitpunkt 0, bei dem der resonante Sensor 1 gewässert, d. h. vollständig durchfeuchtet ist, bis zum Zeitpunkt von 20 Stunden, innerhalb der der Sensor an der Luft getrocknet wurde, kann eine Änderung der Oszillationsfrequenz von 240 MHz beobachtet werden.

Aus der Darstellung ergibt sich zudem, dass der resonante Sensor 1 in Verbindung mit der Oszillator-Schaltungsanordnung 20 breitbandig funktioniert, was eine hohe Messgenauigkeit erlaubt.

Durch die Oszillator-Schaltungsanordnung 20 eines an sich bekannten passiven resonanten Sensors 1 in einer Oszillatorschaltung wird der resonante Sensor 1 aktiv und somit sehr einfach auswertbar.

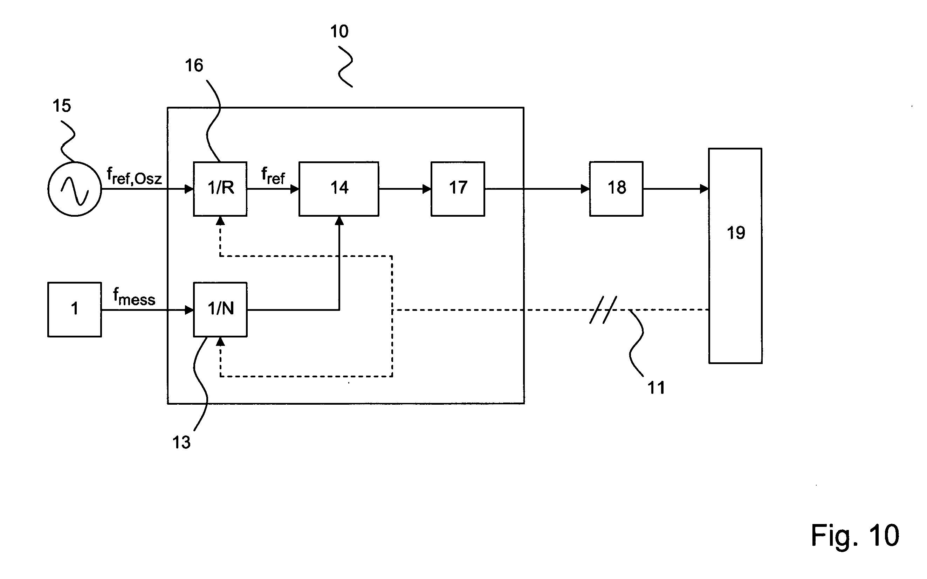

Die Figur 10 lässt ein Blockdiagramm einer Frequenzbestimmungs-Schaltungsanordnung 10 zur Bestimmung der charakteristischen Frequenz $f_{mess}$ eines Messsignals erkennen, das beispielsweise am Ausgang eines passiven Sensors 1 anliegt. Das Messsignal mit der Frequenz $f_{mess}$ wird über einen Messsignal-Vorteiler 13, der einen variabel einstellbaren Messsignal-Vorteilerfaktor N hat, an einen Phasendiskriminator 14 geleitet.

Weiterhin hat die Frequenzbestimmung-Schaltungsanordnung 10 einen Vergleichsoszillator 15, der eine konstante, auf einem festgelegten Wert festgehaltene Vergleichsfrequenz $f_{ref,Osz}$ erzeugt. Die Vergleichsfrequenz $f_{ref,Osz}$ kann beispielsweise mit einem niederfrequenten Quarz einfach erzeugt werden und im Bereich weniger Megahertz liegen.

Die Vergleichsfrequenz $f_{ref,Osz}$ wird über einen Vergleichsfrequenz-Vorteiler 16 mit einem Vergleichsfrequenz-Vorteilerfaktor R ebenfalls an den Phasendiskriminator 14 gegeben, an dem dann die Vergleichsfrequenz $f_{ref}$ sowie die charakteristische Frequenz $f_{mess}$ anliegt.

In dem Phasendiskriminator 14 werden die Phasen der mit den Vorteilerfaktoren R und N geteilten Signale miteinander verglichen. Je nach Resultat des Vergleichs lädt oder entlädt eine an den Phasendiskriminator 14 angeschlossene Ladungspumpe 17 einen Ladungsspeicher 18, der beispielsweise ein einfaches externes Widerstands-Kondensator-Glied (RC-Glied) ist. Die Spannung über dem Ladungsspeicher 18 wird mit einer Steuerungseinheit 19 ausgewertet. Hierzu kann der Ladungsspeicher 18 beispielsweise mit einem Schwellwertentscheider eines Mikrocontrollers μC verbunden werden, wenn die Steuerungseinheit 19 als Mikrocontroller realisiert wird.

Die Steuerungseinheit 19 ist ihrerseits über Steuerleitungen 11 mit dem Messsignal-Vorteiler 13 und dem Vergleichsfrequenz-Vorteiler 6 verbunden, um die Messsignal-Vorteilerfaktoren N und Vergleichsfrequenz-Vorteilerfaktoren R variabel einzustellen.

Der Messvorgang läuft mit dieser Frequenzbestimmung-Schaltungsanordnung 10 folgendermaßen ab:

Zunächst werden Register für die Vorteilerfaktoren N und R in den Messsignal-Vorteiler 13 und Vergleichsfrequenz-Vorteiler 16 mittels einer geeigneten Schnittstelle, wie beispielsweise einer SPI-Schnittstelle, von der Steuerungseinheit 19 derart beschrieben, dass die charakteristische Frequenz $f_{mess}$ des Messsignals größer als die Vergleichsfrequenz $f_{ref,Osz}$ multipliziert mit dem Messsignal-Vorteilerfaktor N und dividiert durch den Vergleichsfrequenz-Vorteilerfaktor R ist, d.h.:

$$f_{mess} > \frac{f_{ref,Osz}}{R}\, N = f_{ref}\, N$$

Die Ladungspumpe 17 liefert unter dieser Bedingung keinen Strom an das nachfolgende RC-Glied mit dem Ladungsspeicher 18, so dass keine Spannung am Schwellwertentscheider der Steuerungseinheit 19 anliegt. Im Folgenden werden die Register Register mit den Messsignal-Vorteilerfaktoren N und Vergleichsfrequenz-Vorteilerfaktoren R solange systematisch variiert, bis die charakteristische Frequenz $f_{mess}$ kleiner als die Vergleichsfrequenz $f_{ref}$ multipliziert mit dem Messsignal-Vorteilerfaktor N und dividiert durch den Vergleichsfrequenz-Vorteilerfaktor R wird, d.h.:

$$f_{mess} < \frac{f_{ref,Osz}}{R} \, N = f_{ref} \, N.$$

Unter dieser Bedingung lädt die Ladungspumpe 19 das nachfolgende RC-Glied mit dem Ladungsspeicher 18 auf. Die daraus resultierende Spannungsänderung kann am entsprechenden Digitaleingang des Mikrocontrollers μC, d.h. der Steuerungseinheit 19 detektiert werden. Die Werte der Register der Messignal-Vorteiler 13 und Vergleichsfrequenz-Vorteiler 16 mit dem Messsignal-Vorteilerfaktor N und Vergleichsfrequenz-Vorteilerfaktor R zu dem Zeitpunkt, wenn eine Spannung am RC-Glied anliegt, ergeben dann die gemessene charakteristische Frequenz $f_{mess}$ gemäß der Formel:

$$f_{mess} = \frac{f_{ref,Osz}}{R} \, N = f_{ref} \, N.$$

Die Genauigkeit dieser Messmethode lässt sich variabel durch die Wahl der Vorteilerfaktoren N und R festlegen.
Die gleiche Messmethode funktioniert verständlicher Weise auch umgekehrt, wenn ausgehend von einer Einstellung der Vorteilerfaktoren N und R, bei der die Bedingung

$$f_{mess} < \frac{f_{ref,Osz}}{R} \, N = f_{ref} \, N.$$

erfüllt ist, die Vorteilerfaktoren N und R variiert werden, bis die Bedingung

$$f_{mess} > \frac{f_{ref,Osz}}{R} \, N = f_{ref} \, N$$

erfüllt ist. Dabei wird ein Übergang von hoher Spannung zu niedriger Spannung detektiert.
Aufgrund der geringen Stromaufnahme von PLL-ICs und der oftmals ohnehin verfügbaren Mikrocontrollern ist der Energiebedarf der Frequenzbestimmungs-Schaltungsanordnung gering. Die Frequenzbestimmungs-Schaltungsanordnung 1 kann unter Umständen auch vollständig in einem Mikrocontroller realisiert werden, wenn dieser eine integrierte PLL-Schaltung enthält.

**Patentansprüche**

1. Resonanter Mikrowellensensor (1) zur Bestimmung von Eigenschaften eines zu untersuchenden Materials mittels hochfrequenter Messung eines Reflexionsfaktors mit

   - einem Mikrowellenzuleiter (4) zur Zuleitung des hochfrequenten Signals, und
   - einem Sensorkopf (9),

   **dadurch gekennzeichnet, dass**
   an dem Ende des Mikrowellenzuleiters (4) ein an dem Sensorkopf (9) angrenzender elektrisch leitfähiger planarer Resonator (6) angeordnet ist, und dass der Sensorkopf (9) eine für mindestens eine zu bestimmende Eigenschaft des zu untersuchenden Materials sensitive Schicht (8) aufweist.

2. Resonanter Mikrowellensensor (1) nach Anspruch 1, **dadurch gekennzeichnet, dass** der Resonator (6) aus einer auf einer Ebene planar spiralförmig um ein Zentrum in Kreisbahn gewickelte Leiterbahn gebildet ist.

3. Resonanter Mikrowellensensor (1) nach Anspruch 1, **dadurch gekennzeichnet, dass** der Resonator (6) aus einer Vielzahl gerader Leiterstücke gebildet ist, die auf einer Ebene planar und mit ihren aufeinanderfolgenden Enden senkrecht zueinander stehen.

4. Resonanter Mikrowellensensor (1) nach einem der Ansprüche 1 bis 3, **dadurch gekennzeichnet, dass** der Mikrowellenzuleiter (4) in einem zylindrischen Rohr als Gehäuse (2) angeordnet ist, dessen Ende den zylinderförmigen Sensorkopf (9) bildet, und dass der Resonator (6) in der Ebene quer zur Längsrichtung des Gehäuses (2) planar angeordnet ist.

5. Resonanter Mikrowellensensor (1) nach einem der vorhergehenden Ansprüche, **dadurch gekennzeichnet, dass** der Mikrowellenzuleiter (4) und der Resonator (6) auf einer ersten Oberfläche eines plattenförmigen Substrats (3) angeordnet sind und sich der Sensorkopf (9) von dem Substrat senkrecht zur ersten Oberfläche erstreckt.

**6.** Resonanter Mikrowellensensor (1) nach Anspruch 5, **dadurch gekennzeichnet, dass** auf einer zweiten Oberfläche des Substrats (3), die der ersten Oberfläche des Substrats (3) gegenüberliegt, auf der der Mikrowellenzuleiter (4) und der Resonator (6) angeordnet sind, eine mit elektrischer Masse verbindbare Masse-Ebene (5) ist.

**7.** Resonanter Mikrowellensensor (1) nach Anspruch 6, **dadurch gekennzeichnet, dass** der Sensorkopf (9) auf der zweiten Oberfläche des Substrats (3), die die Masse-Ebene (5) trägt, angeordnet ist.

**8.** Resonanter Mikrowellensensor (1) nach Anspruch 6, **dadurch gekennzeichnet, dass** der Sensorkopf (9) auf der ersten Oberfläche des Substrats (3), die dem Mikrowellenzuleiter (4) und die Spirale (6) trägt, und eine Zwischenschicht (7) zwischen Resonator (6) und der sensitiven Schicht (8) im Sensorkopf (9) angeordnet sind.

**9.** Resonanter Mikrowellensensor (1) nach einem der vorhergehenden Ansprüche, **dadurch gekennzeichnet, dass** der Resonator (6) und der Mikrowellenzuleiter (4) galvanisch miteinander gekoppelt sind.

**10.** Resonanter Mikrowellensensor (1) nach einem der Ansprüche 1 bis 6, **dadurch gekennzeichnet, dass** die Spirale (6) und der Mikrowellenzuleiter (4) mit einer Schlitzkopplung miteinander gekoppelt sind.

**11.** Resonanter Mikrowellensensor (1) nach einem der vorhergehenden Ansprüche, **dadurch gekennzeichnet, dass** die sensitive Schicht (8) zur Ermittlung von Feuchtigkeit in dem an die sensitive Schicht (8) angrenzenden zu untersuchenden Material geeignet ist.

**12.** Oszillator-Schaltungsanordnung (20) zur Erzeugung eines mit einer Oszillationsfrequenz ($f_{osz}$)) oszillierenden elektromagnetischen Signals am Ausgang der Oszillator-Schaltungsanordnung (20), **dadurch gekennzeichnet, dass ein** Verstärker (23) mit einem resonanten Mikrowellensensors (1) nach einem der Ansprüche 1 bis 11 so verkoppelt ist, dass die Resonanzfrequenz ($f_{res}$) des resonanten Mikrowellensensors (1) die Oszillationsfrequenz ($f_{osz}$) bestimmt.

**13.** Oszillator-Schaltungsanordnung (20) nach Anspruch 12, **dadurch gekennzeichnet, dass** der Ausgang des instabilen Verstärkers (23) über den resonanten Mikrowellensensor (1) auf den Eingang des Verstärkers (23) rückgekoppelt ist, wodurch die Oszillator-Schaltungsanordnung (20) stabil wird und das Oszillatorfrequenzsignal am Ausgang der Oszillator-Schaltungsanordnung (20) anliegt.

**14.** Oszillator-Schaltungsanordnung (20) nach Anspruch 12, **dadurch gekennzeichnet, dass** der Verstärker (23) durch eine interne Rückkoppelung instabil ist und eine Ankoppelung des resonanten Mikrowellensensors (1) zur Stabilisierung des Oszillatorsignals dient, das am Ausgang der Oszillatorsierung des Oszillatorsignals dient, das am Ausgang der Oszillator-Schaltungsanordnung (20) anliegt.

**15.** Oszillator-Schaltungsanordnung (20) nach einem der Ansprüche 15 bis 14, **dadurch gekennzeichnet, dass** der instabile Verstärker (23) mit einer Gleichspannung oder einem niederfrequenten Funksignal mit Leistung versorgt ist.

**16.** Frequenzbestimmungs-Schaltungsanordnung (10) zur breitbandigen Bestimmung der charakteristischen Frequenz ($f_{mess} = f_{osz}$) eines Messsignals, insbesondere des Ausgangssignals der Oszillator-Schaltungsanordnung (20) nach einem der Ansprüche 12 bis 15, mit einem Phasendiskriminator (14) zum Vergleich der Subharmonischen des Messsignals mit einer Vergleichsfrequenz ($f_{ref}$) eines Vergleichsoszillatorsignals von einem Vergleichsoszillator (15),
**dadurch gekennzeichnet, dass**
vor dem Eingang des Phasendiskriminators (14) für das Messsignal ein mit einem Messsignal-Vorteilerfaktor (N) variabel einstellbarer Messsignal-Vorteiler (13) angeordnet ist und
eine mit dem Messsignal-Vorteiler (13) und dem Vergleichsoszillator (15) zusammenwirkende Steuerungseinheit (19) eingerichtet ist, um den Messsignal-Vorteiler (13) und die Vergleichsfrequenz ($f_{ref}$) schrittweise so zu variieren, dass ausgehend von einer Einstellung, bei der die charakteristische Frequenz ($f_{mess}$) größer als die mit dem Messsignal-Vorteilerfaktor (N) multiplizierte, am Phasendiskriminator (14) anliegende Vergleichsfrequenz ($f_{ref}$) ist, die charakteristische Frequenz ($f_{mess}$) kleiner als die mit dem Messsignal-Vorteilerfaktor (N) multiplizierte, am Phasendiskriminator (14) anliegende Vergleichsfrequenz ($f_{ref}$) wird, wobei die charakteristische Frequenz ($f_{mess}$) aus dem Messsignal-Vorteilerfaktor (N) und der am Phasendiskriminator (14) anliegenden Vergleichsfrequenz ($f_{ref}$) im Übergang zwischen kleinerer und größerer mit dem Messsignal-Vorteilerfaktor (N) multiplizierter Vergleichsfrequenz ($f_{ref}$) als die charakteristische Frequenz ($f_{mess}$) bestimmt wird.

**17.** Frequenzbestimmungs-Schaltungsanordnung (10) nach Anspruch 16, **dadurch gekennzeichnet, dass** vor dem Eingang des Phasendiskriminators (14) für das Vergleichsoszillatorsignal ein weiterer mit einem Vergleichsfrequenz-Vorfaktor (R) variabel durch die Steuereinheit (19) einstellbarer Vergleichsfrequenz-Vorteiler (16) angeordnet ist und die Steuerungseinheit (19) zur Ermittlung der charakteristischen Frequenz ($f_{mess}$) aus dem im Übergang zwischen größerer und kleinerer charakteristischen Frequenz ($f_{mess}$) als die mit dem Messsignal-Vorteilerfaktor (N) multiplizierte und dem Vergleichsfrequenz-Vorteilerfaktor (R) dividierte Vergleichsfrequenz ($f_{ref, osz}$) des Vergleichsoszillatorsignals eingerichtet ist.

18. Frequenzbestimmungs-Schaltungsanordnung (10) nach Anspruch 16 oder 17, **gekennzeichnet durch** eine Ladungspumpe (17) am Ausgang des Phasendiskriminators (14) und einen an den Ausgang der Ladungspumpe (17) angeschlossenen Ladungsspeicher (18).

19. Frequenzbestimmungs-Schaltungsanordnung (10) nach Anspruch 18, **dadurch gekennzeichnet, dass** der Ladungsspeicher (18) ein Widerstands-Kondensator-Glied ist.

20. Frequenzbestimmungs-Schaltungsanordnung (10) nach Anspruch 19, **dadurch gekennzeichnet, dass** eine Reihenschaltung aus Widerstand und Kondensator zwischen Ausgang der Ladungspumpe (17) und dem Basispotential der Frequenzbestimmungs-Schaltungsanordnung (10) liegt, wobei die über der Reihenschaltung abfallende Spannung ein Maß dafür ist, ob die charakteristische Frequenz ($f_{mess}$) größer oder kleiner als die mit dem Messsignal-Vorteilerfaktor (N) multiplizierte am Phasendiskriminator (14) anliegende Vergleichsfrequenz ($f_{ref}$) ist, und zur Ansteuerung der Steuerungseinheit (19) dient.

21. Frequenzbestimmungs-Schaltungsanordnung (10) nach einem der Ansprüche 16 bis 20, **dadurch gekennzeichnet, dass** der Eingang des Messsignal-Vorteilers (13) zur Verbindung mit einer Messeinheit vorgesehen ist, um die charakteristische Frequenz ($f_{mess}$) des Messsignals als Messgröße der Messeinheit zu bestimmen.

Fig. 1

1∿

8

6

5

4

3

7

Fig. 2

1

9

7

6

3

8

5

4

Fig. 3

Fig. 4

$$f_{osz} \approx f_{res}$$

23

20

Feuchte

$f_{res}$

1

Fig. 5

20

Feuchte

$f_{res}$

$f_{osz} = f_{res}$

1                    23

Fig. 6 a)

20

Feuchte

1

$f_{res}$

$f_{osz} = f_{res}$

23

Fig. 6 b)

20

Feuchte

$f_{res}$

$f_{osz} = f_{res}$

23                    1

Fig. 6 c)

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10102578 C2
- EP 0908718 A1
- US 5334941 A1